# EUROPEAN PATENT APPLICATION

(11) **EP 1 600 750 A1**
(43) Date of publication of application: **30.11.2005**
(21) Application number: 05011403.2
(22) Date of filing: 25.05.2005
(51) Int. Cl.: G01L 1/12, G01G 19/414, G01G 3/15

(54) **Seat weight measuring apparatus**

(30) Priority: 25.05.2004 JP 2004154153
(71) Applicant: TAKATA CORPORATION, Minato-ku, Tokyo 106-8510 (JP)
(72) Inventor: Fujii, Hiroaki, Minato-ku Tokyo 106-8510 (JP)
(74) Representative: Bertsch, Florian Oliver

(57) **Abstract**

In order to provide a seat weight measuring apparatus (11) capable of maintaining sufficient measurement accuracy without setting excessive measurement accuracy, capable of preventing error of measurement, and capable of preventing the assembly cost from being increased, the seat weight measuring apparatus (11) comprises a support body (14) one end of which is fixed in position relative to a vehicle body and the other end of which is displaced corresponding to a load from a vehicle seat side, a permanent magnet (19) which is disposed at one end of the support body (14) and opens to at least both ends in the horizontal direction of the vehicle body, a held body (18) which has a shape retaining property and is held at its middle position by the other end of the support body (14), and a detector (20) which is disposed on a tip of the held body (18) to face the permanent magnet (19) with a space therebetween. Movement of the held body is thus only registered in the vertical direction. The support body may be configured such that movement in the vertical direction is easier than movement in the horizontal direction.

## Description

The present invention relates to a seat weight measuring apparatus, installed to a vehicle seat, for measuring a weight corresponding to body weight of an occupant.

### Background of the Invention

Seat occupancy detecting apparatuses installed to vehicle seats are well known in the art. Such a seat occupancy detecting apparatus provides information about occupancy of a vehicle seat. The information is used for a detection switch for determining whether or not a seat belt is fastened, for example, by detecting the insertion of a seat belt tongue to a seat belt buckle, whereby the detection switch can operate in conjunction with the information about occupancy.

The seat occupancy detecting apparatus detects occupancy according to ON/OFF of switches installed in seat slide rails or a seat cushion of the vehicle seat. When the occupancy is detected and the seat belt is not fastened, an alarm for promoting an occupant to fasten the seat belt is provided, for example, by turning on an indicator lamp.

On the other hand, recently, there is a demand for actuating an airbag to control an inflator to set a developing volume of the airbag into a plurality of levels or a demand to set a belt tension of a seat belt into a plurality of levels.

This is attributed to demands to make the pressure for developing the airbag or the belt tension of the seat belt to differ between an adult and a child.

A seat occupancy detecting apparatus which detects only occupancy as mentioned above does not enables such a control as to set the developing volume of an airbag by controlling the actuation of the airbag into a plurality of levels or set the belt tension of a seat belt into a plurality of levels.

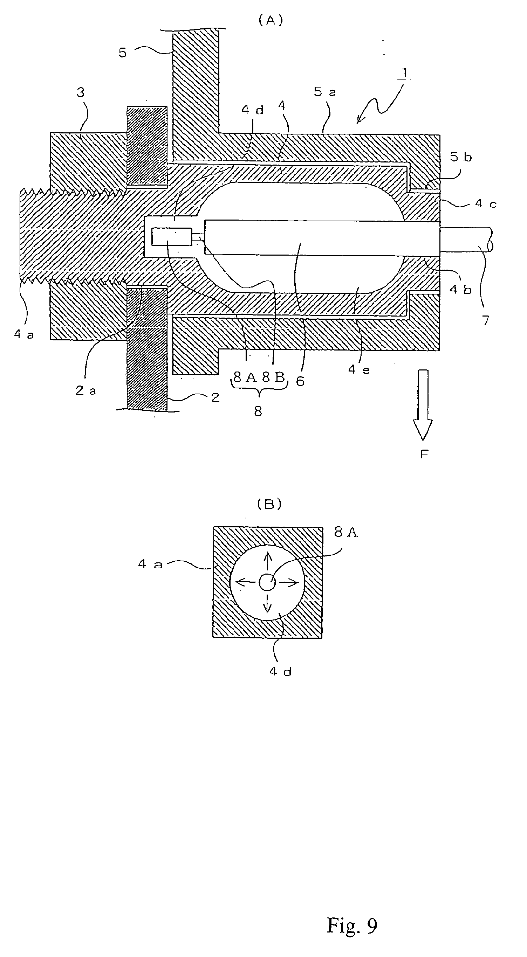

Figs. 9(A), 9(B) show an example of a seat weight measuring apparatus which detects at least a plurality of levels of a weight of an occupant sitting in a seat so as to enable such a control as to set the developing volume of an airbag into a plurality of levels or set the belt tension of a seat belt into a plurality of levels (for example, see Japanese Patent Unexamined Publication 2003-329519), Fig. 9(A) is a longitudinal sectional view of the seat weight measuring apparatus and Fig. 9(B) is a cross sectional view of a weight sensing section thereof.

In Figs. 9(A), 9(B), the seat weight measuring apparatus 1 is provided with a support body 4 fixed to a seat rail 2 by a nut 3.

The support body 4 is provided with a fixing shaft 4a which is chamfered to correspond to the shape of an opening 2a formed in the seat rail 2 so as to limit the rotation in radial directions and which is substantially oval in section. The fixing shaft 4a projects from one end of the support body 4. The fixing shaft 4a is formed in its outer periphery with thread groove whereby the nut 3 is screwed onto the fixing shaft 4a. The support body 4 is also provided on the other end with a projection 4c having a cable through hole 4b formed therein. Further, the support body 4 is formed with a concave portion 4d having a cylindrical section and a hollow portion 4e providing a hollow space between the cable through hole 4c and the concave portion 4d. The support body 4 except the fixing shaft 4a, i.e. the other end side portion of the support body 4, is surrounded by a surrounding portion 5a formed in an arm 5 with keeping away from the surrounding portion 5a, the arm 5 composing a part of a vehicle seat body (the entire body is not shown). The projection 4c is fitted in an opening 5b formed in the surrounding portion 5a. Held in the cable through hole 4b is an end of a resin cylindrical collar 6 having a shape retaining property. In the hollow portion 4e, an inner wall is composed of rounded curved walls in order to reduce stress concentration (notch effect) caused when a load (weight) by a seating force F is applied. For example, the rounded curved walls are formed by milling operation.

A cable 7 for transmitting detected signals is passed through the cylindrical collar 6. On one end of the cable 7, a detector 8 facing the concave portion 4d is provided.

As shown in Fig. 9(b), in the normal state, the detector 8 is positioned substantially coaxially with the concave portion 4d and is substantially equally spaced apart from the inner wall of the concave portion 4d. The detector 8 comprises a permanent magnet (magnetism generating means) 8A on the tip thereof and a magnetic sensor (magnetism detecting means) 8B which is Hall IC. In the normal state, the permanent magnet 8A and the sensor 8B are positioned coaxially with the concave portion 4d. That is, the axis of magnetic field of the permanent magnet 8A extends along the axis of the support body 4.

In the structure as mentioned above, when the vehicle seat body is occupied by an occupant, a seating force F corresponding to the weight of the occupant to be measured is transmitted to the projection 4c of the support body 4 through the arm 5. As a result, the support body 4 is deformed because the support body 4 is supported at one side in the seat rail 2 just like a cantilever. The deformation amount is measured from displacement direction and displacement amount of the detector 8 relative to the concave portion 4d, thereby measuring the weight of the occupant.

That is, even when the support body 4 having the hollow portion 4e is deformed, the cylindrical collar 7 is not deformed without being affected by the deformation of the support body 4. Therefore, the axis of the cylindrical collar 7 is inclined relative to the axis of the support body 4 so that the relative position between the detector 8 and the concave portion 4d is varied. As for lines of magnetic flux of the permanent magnet 8A composing the outer periphery of the detector 8, the strength of magnetic field is increased at a region where the distance in the radial direction is narrower. The variation in strength of magnetic field is detected by the sensor 8B, thereby measuring the weight of the occupant.

The deformation of the support body by the seating force F depends on the distance between supported portions, that is, the distance between the opening 2a of the seat rail 2 and the opening 5b of the arm 5.

### Problems to be solved by the Invention

By the way, in the seat weight measuring apparatus having the aforementioned structure, the concave portion 4d is positioned all around the periphery of 360° of the detector 8.

The detection accuracy of the detector 8 must depend on the load during fixing operation (for example, the force of screwing the nut 3) when the detector 8 is installed to the vehicle seat so that it is required to take such load into consideration. In addition, the permanent magnet 8A may be displaced in the horizontal direction (the direction shown by leftward and rightward arrows ↔ in Fig. 9(B)) of the vehicle by load due to twisting given when the seat is installed to the vehicle, thus resulting in error of measurement.

Accordingly, it is quite difficult to arrange the axis of the detector 8 coaxially with the axis of the concave portion 4d. There are further problems that irregularity of alignment may be one of factors causing error of measurement as mentioned above and the alignment requires skill. Moreover, there is another problem of increasing the assembly cost because confirmation and adjustment operation for the measurement accuracy are required.

The present invention was made to solve the aforementioned problems and it is an object of the present invention to provide a seat weight measuring apparatus capable of maintaining sufficient measurement accuracy without setting excessive measurement accuracy, capable of preventing error of measurement, and capable of simplifying the structure and thus preventing the assembly cost from being increased.

According to the invention, this object is achieved by a seat weight measuring apparatus as defined in claim 1 or 6. The dependent claims define preferred and advantageous embodiments of the invention.

For achieving the object, a seat weight measuring apparatus is characterized by comprising: a support body one end of which is fixed in position relative to a vehicle body and the other end of which is displaced corresponding to a load from a vehicle seat side; a held body which has a shape retaining property and is held at its middle position by the other end of said support body; a held body facing portion for detecting displacement of said support body which is formed in said support body to face a tip of said held body such that a distance from the tip of said held body to the held body facing portion in the vertical direction of a vehicle body is smaller than a distance from the tip of said held body from the held body facing portion in the horizontal direction; and a magnetism detecting means disposed on the tip of said held body, wherein load from the vehicle seat side is measured based on variation in strength of magnetic field accompanying variation in distance between said held body facing portion and the tip of said held body, said variation being linked with displacement of said support body corresponding to the load from the vehicle seat side.

Said seat weight measuring apparatus may be characterized in that said held body facing portion comprises a first magnetism generating means, and said magnetism detecting means detects the strength of magnetic filed which is generated from said first magnetism generating means and varies depending on said distance in said vertical direction of the vehicle body.

Said first magnetism generating means be disposed over the held body only at the upper side of the vehicle body.

Said seat weight measuring apparatus may comprise a second magnetism generating means disposed on the tip of said held body, wherein said magnetism detecting means detects the strength of magnetic filed which is generated from said second magnetism generating means and varies depending on said distance in said vertical direction of the vehicle body.

Said held body facing portion may have a structure of opening at least one side in said horizontal direction of the vehicle body.

According to the invention, a seat weight measuring apparatus is characterized by comprising: a support body in which the rigidity in the vertical direction of a vehicle body is set to be smaller than the rigidity in the horizontal direction of the vehicle body, and one end of which is fixed in position relative to a vehicle body and the other end of which is displaced corresponding to a load from a vehicle seat side, a held body which has a shape retaining property and is held at its middle position by the other end side of said support body, a held body facing portion for detecting displacement of said support body which is formed in said support body to face a tip of said held body, and a magnetism detecting means disposed on the tip of said held body, wherein load from the vehicle seat side is measured based on variation in strength of magnetic field accompanying variation in distance between said held body facing portion and the tip of said held body, said variation being linked with displacement of said support body corresponding to the load from the vehicle seat side.

Said held body facing portion may comprise a third magnetism generating means, and said magnetism detecting means detects the strength of magnetic filed which is generated from said third magnetism generating means and varies depending on said distance.

Said seat weight measuring apparatus may further comprise a fourth magnetism generating means disposed on the tip of said held body, wherein said magnetism detecting means detects the strength of magnetic filed which is generated from said fourth magnetism generating means and varies depending on said distance.

The seat weight measuring apparatus of the present invention is capable of maintaining sufficient measurement accuracy without setting excessive measurement accuracy, capable of preventing error of measurement, and capable of simplifying the structure and thus preventing the assembly cost from being increased.

### Brief Explanation of the drawings

Figs. 1(A), 1(B) show an example 1 of the seat weight measuring apparatus of the present invention, wherein Fig. 1(A) is a longitudinal sectional view of the seat weight measuring apparatus and Fig. 1(B) is a cross sectional view of a weight detecting section thereof.
Fig. 2 shows the example 1 of the seat weight measuring apparatus of the present invention and is a perspective view of main parts of the seat weight measuring apparatus.
Figs. 3(A), 3(B) show a variation 1 of the example 1 of the seat weight measuring apparatus of the present invention, wherein Fig. 3(A) is a longitudinal sectional view of the seat weight measuring apparatus and Fig. 3(B) is a cross sectional view of a weight detecting section thereof.
Figs. 4(A), 4(B) show a variation 2 of the example 1 of the seat weight measuring apparatus of the present invention, wherein Fig. 4(A) is a longitudinal sectional view of the seat weight measuring apparatus and Fig. 4(B) is a cross sectional view of a weight detecting section thereof.
Figs. 5(A), 5(B) show a variation 3 of the example 1 of the seat weight measuring apparatus of the present invention, wherein Fig. 5(A) is a longitudinal sectional view of the seat weight measuring apparatus and Fig. 5(B) is a cross sectional view of a weight detecting section thereof.
Figs. 6(A), 6(B) show a variation 4 of the example 1 of the seat weight measuring apparatus of the present invention, wherein Fig. 6(A) is a longitudinal sectional view of the seat weight measuring apparatus and Fig. 6(B) is a cross sectional view of a weight detecting section thereof.
Figs. 7(A), 7(B) show an example 2 of the seat weight measuring apparatus of the present invention, wherein Fig. 7(A) is a longitudinal sectional view of the seat weight measuring apparatus and Fig. 7(B) is a cross sectional view of a weight detecting section thereof.
Fig. 8 shows the example 2 of the seat weight measuring apparatus of the present invention and is a perspective view of main parts of the seat weight measuring apparatus.
Figs. 9(A), 9(B) show a conventional seat weight measuring apparatus, wherein Fig. 9(A) is a longitudinal sectional view of the seat weight measuring apparatus and Fig. 9(B) is a cross sectional view of a weight detecting section thereof.

Hereinafter, the seat weight measuring apparatus of the present invention will be described with reference to drawings.

### Example 1

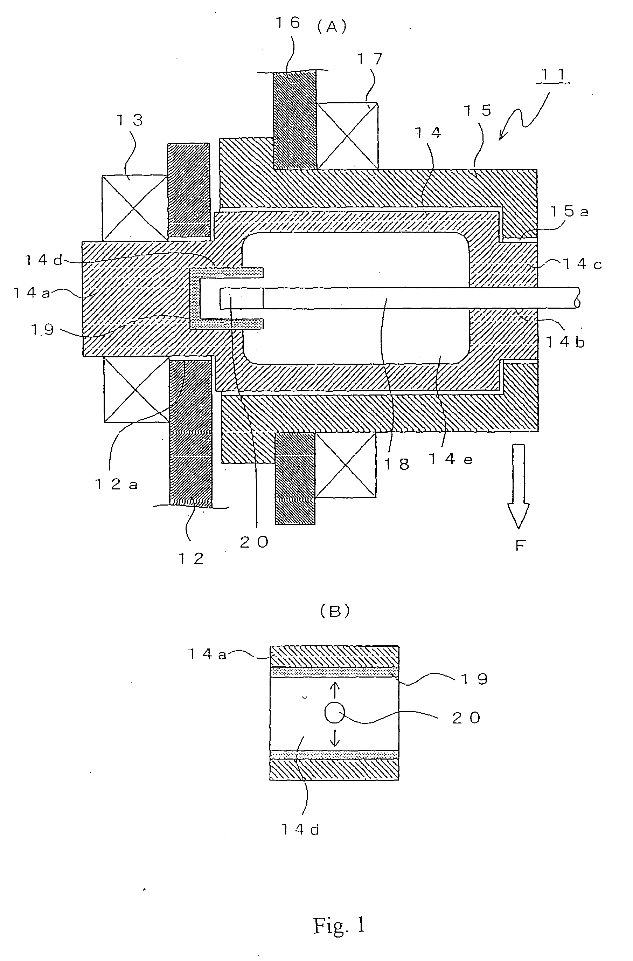

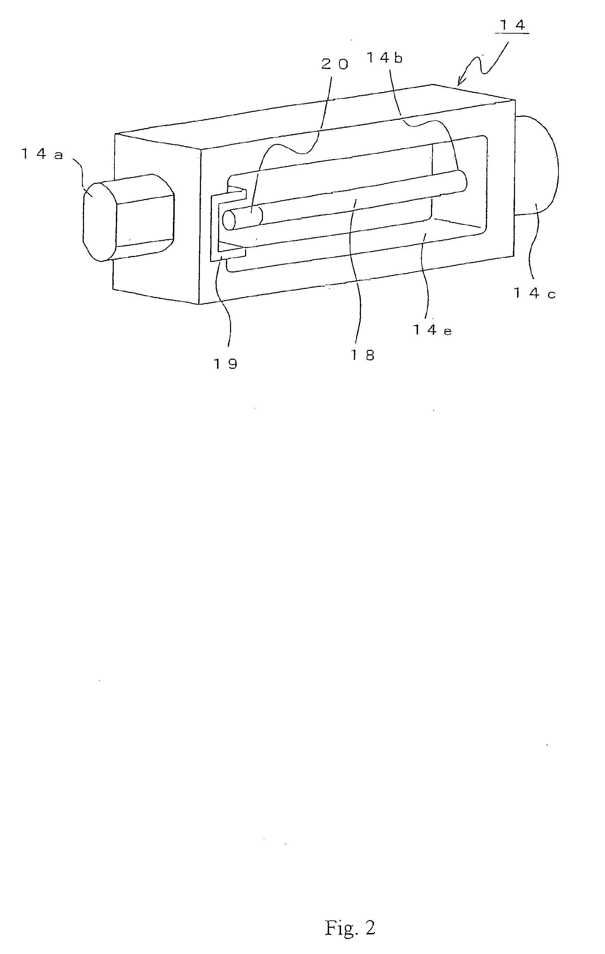

Figs. 1(A), 1(B) and Fig. 2 show an example 1 of the seat weight measuring apparatus of the present invention, wherein Fig. 1(A) is a longitudinal sectional view of the seat weight measuring apparatus, Fig. 1(B) is a cross sectional view of a weight detecting section thereof, and Fig. 2 is a perspective view of main parts of the seat weight measuring apparatus.

In these drawings, the seat weight measuring apparatus 11 comprises a support body 14 fixed to a seat rail 12 via a nut 3 and a housing 15 surrounding the support body 14.

The support body 14 is provided with a fixing shaft 14a which is chamfered to correspond to the shape of an opening 12a formed in the seat rail 12 so as to limit the rotation in radial directions and which is substantially oval in section. The fixing shaft 14a projects from one end of the support body 14. The fixing shaft 14a is formed in its outer periphery with thread groove, whereby the nut 13 is screwed onto the fixing shaft 14a. The support body 14 is also provided on the other end with a projection 14c having a cable through hole 14b formed therein. Further, the support body 14 is formed with a concave portion 14d (held body facing portion) extending along a horizontal axis perpendicular to the axis of the support body 14 (in the depth direction of paper) and a hollow portion 14e providing a hollow space between the cable through hole 14c and the concave portion 14d. In the hollow portion 14e, an inner wall is composed of rounded curved walls in order to reduce stress concentration (notch effect) caused when a load (weight) by a seating force F is applied. For example, the rounded curved walls are formed by milling operation.

The housing 15 is fixed to an arm 16 composing a part of a vehicle seat body (the entire body is not shown) by a nut 17. The housing 15 surrounds the support body 14 except the fixing shaft 14a, i.e. the other end side portion of the support body 14, with keeping away from the support body 14. The housing 15 holds the projection 14c by the opening 15a thereof.

A cable (held body) 18 having a shape retaining property is held at its middle position by the cable through hole 14b. A detector 20 is disposed on a tip of the cable 18 such that the detector 20 faces a magnetism generating means (a permanent magnet in this example, the same is true for the following) 19 of which section is a U-like shape opening to the cable through hole 14c and which is disposed in the concave portion 14d.

As shown in Fig. 1(B), the permanent magnet 19 faces the detector 20 at a predetermined distance in the vertical direction of the vehicle body and opens in the horizontal direction of the vehicle body. It should be noted that the permanent magnet 19 does not necessarily open in the horizontal direction. It is enough to satisfy such a condition that the distance between the permanent magnet 19 and the detector 20 in the horizontal direction is sufficiently longer the distance between the permanent magnet 19 and the detector 20 in the vertical direction.

The detector 20 has a magnetic sensor (magnetism detecting means) inside thereof and the sensor is Hall IC. In the normal state, the detector 20 is positioned at the middle in the vertical direction relative to the permanent magnet 19.

In the structure as mentioned above, when the vehicle seat body is occupied by an occupant, a seating force F corresponding to the weight of the occupant to be measured is transmitted to the projection 14c of the support body 14 through the arm 16 and the housing 15. As a result, the support body 14 is deformed because the support body 14 is supported at one side in the seat rail 12 just like a cantilever. The deformation amount is measured from displacement amount of the permanent magnet 19 relative to the detector 20, thereby measuring the weight of the occupant.

That is, as the support body 14 is deformed, the cable 18 is inclined about the cable through hole 14b so as to vary the relative position between the detector 20 and the permanent magnet 19. As for the lines of magnetic flux of the permanent magnet 19, the strength of magnetic field is increased at a region where the distance is narrower. The variation in strength of magnetic field is detected by the sensor of the detector 20, thereby measuring the weight of the occupant.

Since the permanent magnet 19 opens in the horizontal direction, the detector 20 has detection range only in the vertical direction of the vehicle body, thereby preventing error of measurement due to accidental displacement in the horizontal direction of the vehicle body.

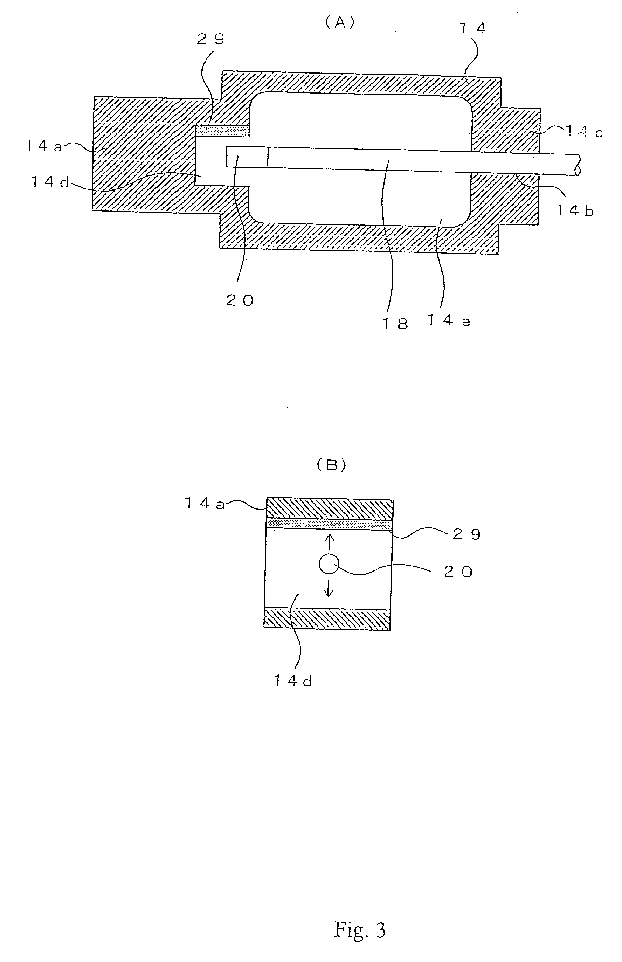

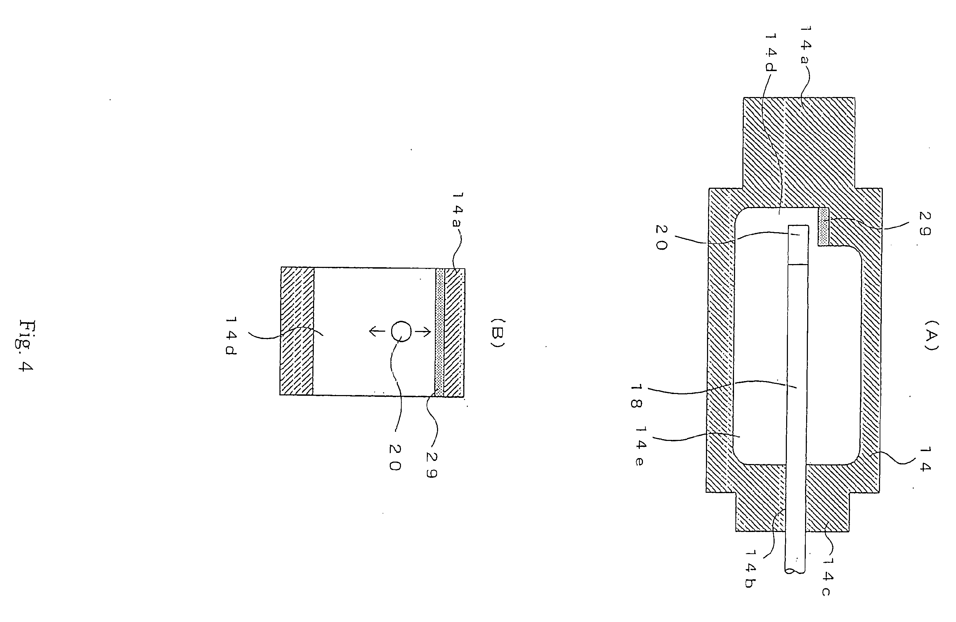

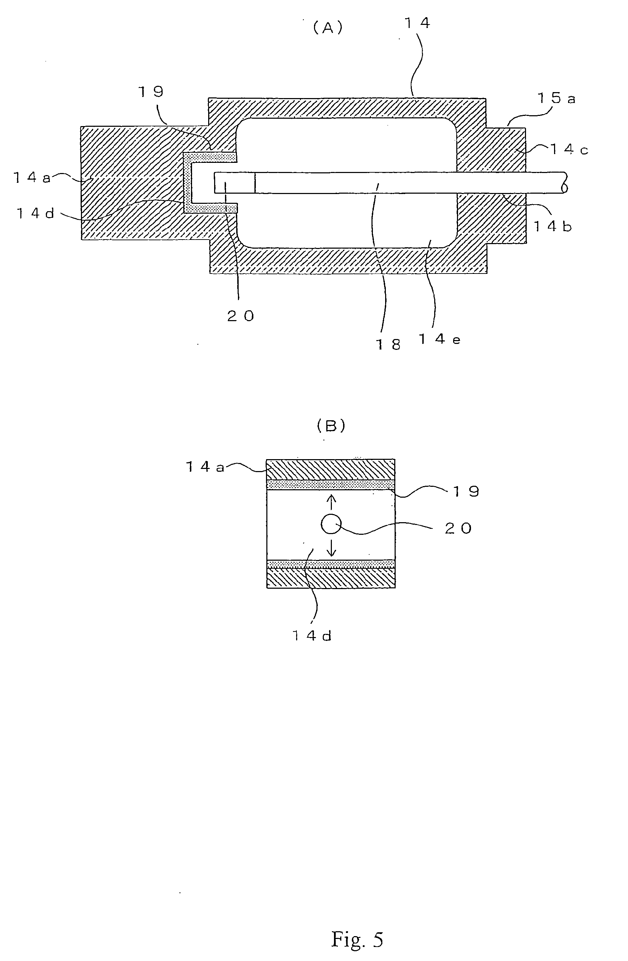

By the way, since it is enough for measuring the weight that the displacement when the detector 20 displaces in the upward direction of the vehicle body is detected by the detector 20, the permanent magnet 19 may be disposed only at the upper side of the vehicle body as shown in Figs. 3(A), 3(A) and Figs. 4(A), 4(B). Alternatively, the permanent magnet 19 may be buried in the support body as shown in Figs. 5(A), 5(B).

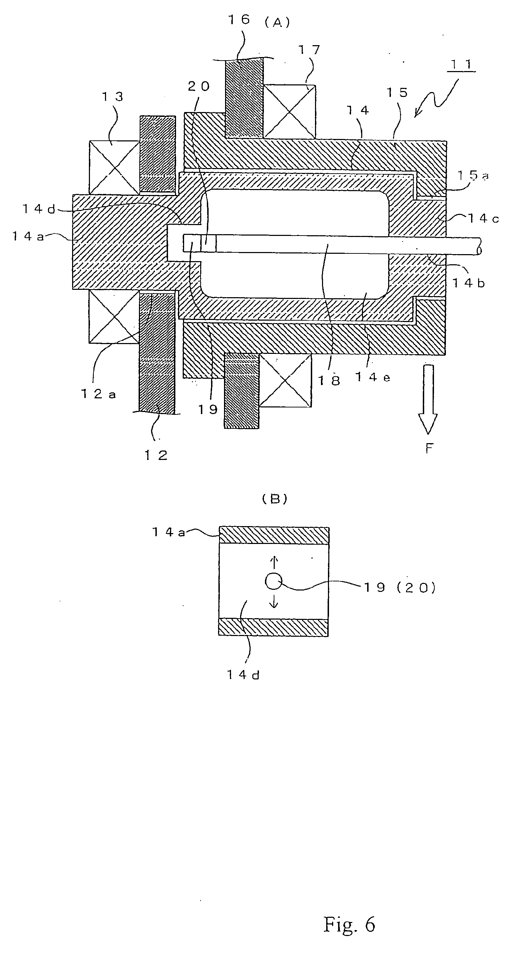

As another variation, as shown in Figs. 6(A), 6(B), both a permanent magnet 19 and a detector 20 are disposed on the tip of the cable 18 and a sensor within the detector 20 detects a variation in strength of magnetic field corresponding to variation in vertical distance between the detector 20 and a concave portion 14d as a held body facing portion. In these cases, the same effect can be obtained.

### Example 2

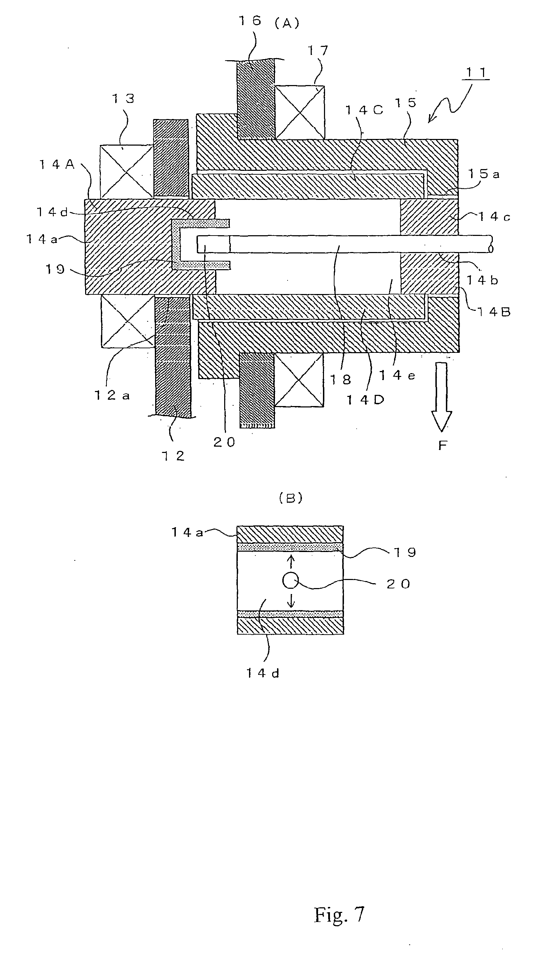

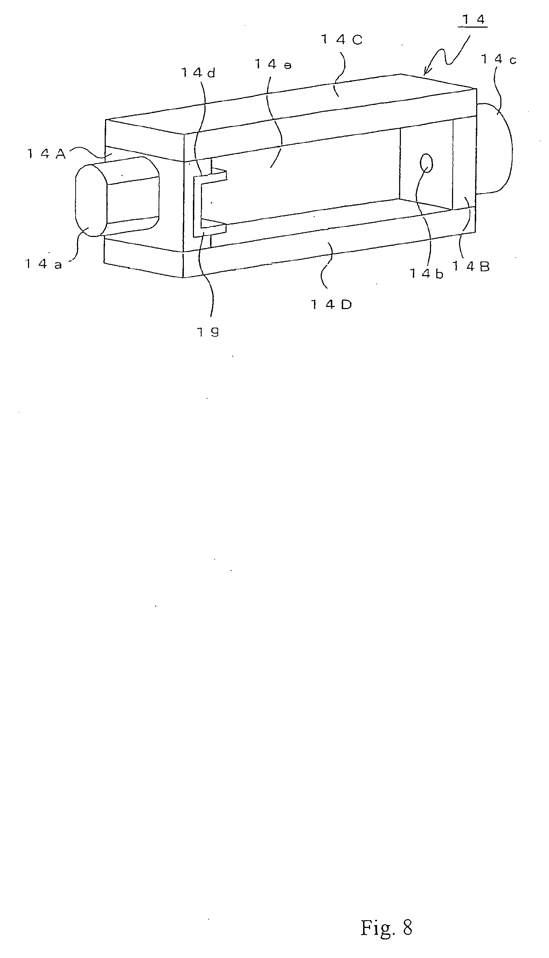

Figs. 7(A), 7(B) and Fig. 8 show an example 2 of the seat weight measuring apparatus of the present invention, wherein Fig. 7(A) is a longitudinal sectional view of the seat weight measuring apparatus, Fig. 7(B) is a cross sectional view of a weight detecting section thereof, and Fig. 8 is a perspective view of main parts of the seat weight measuring apparatus.

In these drawings, the seat weight measuring apparatus 21 comprises a support body 14 fixed to a seat rail 12 via a nut 3 and a housing 15 surrounding the support body 14.

The support body 14 is a block construction comprising end parts 14A, 14B, an upper surface part 14C and a lower surface part 14D each having a substantially flat plate shape (the end parts 14A, 14B and the surface parts 14C, 14D are fixed by suitable fixing means such as welding or rivets). According to the side opening structure, the support body 14 is designed such that the rigidity in the vertical direction of the vehicle body is smaller than the rigidity in the horizontal direction of the vehicle body.

The end part 14A of the support body 14 is provided with a fixing shaft 14a which is chamfered to correspond to the shape of an opening 12a formed in the seat rail 12 so as to limit the rotation in radial directions and which is substantially oval in section. The fixing shaft 14a projects from one end of the end part 14A. The fixing shaft 14a is formed in its outer periphery with thread groove, whereby the nut 13 is screwed onto the fixing shaft 14a. The end part 14B of the support body 14 is also provided on the other end with a projection 14c having a cable through hole 14b formed therein. Further, the support body 14 is formed with a concave portion 14d (held body facing portion) extending along a horizontal axis perpendicular to the axis of the support body 14 (in the depth direction of paper) and with a hollow portion 14e providing a hollow space between the end part 14A and the end part 14B of the support body 14.

Since the housing 15 has substantially the same structure as the example 1, the detail description of the housing 15 will be omitted.

On the other hand, a cable 18 having a shape retaining property is held at its middle position by the cable through hole 14b of the support body end part 14B. A detector 20 is disposed on a tip of the cable 18 such that the detector 20 faces a magnetism generating means (a permanent magnet in this example, the same is true for the following) 19 which section is a U-like shape opening to the cable through hole 14c and which is disposed in the concave portion 14d.

In the same manner as the example 1, the distance between the permanent magnet 19 and the detector 20 in the horizontal direction of the vehicle body is set to be sufficiently longer than the distance between the permanent magnet 19 and the detector 20 in the vertical direction of the vehicle body. The details of the detector 20 are also the same as the aforementioned example 1.

In the structure of the example 2 as mentioned above, when the vehicle seat body is occupied by an occupant, a seating force F corresponding to the weight of the occupant to be measured is transmitted to the projection 14c of the support body end part 14B similarly to the aforementioned example 1. As a result, the support body 14 is deformed because the support body 14 is supported at one side in the seat rail 12 just like a cantilever. The deformation amount is measured from displacement amount in relative position between the permanent magnet 19 and the detector 20, thereby measuring the weight of the occupant.

That is, as the support body 14 is deformed, the cable 18 is inclined about the cable through hole 14b so as to vary the relative position between the detector 20 and the permanent magnet 19 because the position of the support body end pat 14A is fixed relative to the seat rail 12. As for the lines of magnetic flux of the permanent magnet 19, the strength of magnetic field is increased at a region where the distance is narrower. The variation in strength of magnetic field is detected by the sensor of the detector 20, thereby measuring the weight of the occupant.

Since the support body 14 is designed such that the rigidity in the vertical direction of the vehicle body is smaller than the rigidity in the horizontal direction of the vehicle body, the support body 14 is easily deformed (deflected) particularly in the vertical direction. In addition, the permanent magnet 19 opens in the horizontal direction and the detector 20 has detection range only in the vertical direction of the vehicle body. These prevent error of measurement due to accidental displacement in the horizontal direction of the vehicle body. This example also provides another effect of facilitating the workability of the support body 14 because of the block construction mentioned above.

In the aforementioned example 2, in so far as the effect by the present invention of improving the detection accuracy in the vertical direction of the vehicle body as compared to the conventional art is obtained, the distance between the permanent magnet 19 and the detector 20 in the horizontal direction of the vehicle body may be set to be the same as that in the vertical direction of the vehicle body, besides that the permanent magnet 19 is formed to open in the horizontal direction of the vehicle body and that the distance between the permanent magnet 19 and the detector 20 in the vertical direction of the vehicle body may be set to be smaller that in the horizontal direction of the vehicle body. In this case, because of the difference in rigidity of the support body 14, the detection accuracy in the vertical direction of the vehicle body is improved at least from the conventional art.

Also in the aforementioned example 2, similarly to the aforementioned variation shown in Figs. 6(A), 6(B), both the permanent magnet 19 and the detector 20 may be disposed on the tip of the cable 18 so that a sensor within the detector 20 detects a variation in strength of magnetic field corresponding to variation in vertical distance between the detector 20 and a concave portion 14d as a held body facing portion. In these cases, the same effect can be obtained.

## Claims

1. A seat weight measuring apparatus comprising:
a support body (14) one end of which is fixed in position relative to a vehicle body (12) and the other end of which is displaced corresponding to a load (F) from a vehicle seat side;
a held body (18) which has a shape retaining property and is held at its middle position by the other end of said support body (14);
a held body facing portion (14d) for detecting displacement of said support body (14) which is formed in said support body (14) to face a tip of said held body (18) such that a distance from the tip of said held body (18) to the held body facing portion (14d) in the vertical direction of a vehicle body is smaller than a distance from the tip of said held body (18) from the held body facing portion (14d) in the horizontal direction; and
a magnetism detecting means (20) disposed on the tip of said held body (18), wherein load (F) from the vehicle seat side is measured based on variation in strength of a magnetic field accompanying variation in distance between said held body facing portion (14d) and the tip of said held body (18), said variation being linked with displacement of said support body (14) corresponding to the load (F) from the vehicle seat side.

2. A seat weight measuring apparatus as claimed in claim 1, wherein said held body facing portion (14d) comprises a magnetism generating means (19; 29), and
said magnetism detecting means (20) detects the strength of a magnetic field which is generated from said magnetism generating means (29; 29) and varies depending on said distance in said vertical direction of the vehicle body.

3. A seat weight measuring apparatus as claimed in claim 2, wherein said magnetism generating means (29) is disposed over the held body (18) only at the upper side of the vehicle body.

4. A seat weight measuring apparatus as claimed in any one of claims 1 through 3, further comprising another magnetism (19) generating means disposed on the tip of said held body (18), wherein
said magnetism detecting means (20) detects the strength of a magnetic field which is generated from said other magnetism generating means (19) and varies depending on said distance in said vertical direction of the vehicle body.

5. A seat weight measuring apparatus as claimed in any one of claims 1 through 4, wherein said held body facing portion (14d) has a structure of opening at least one side in said horizontal direction of the vehicle body.

6. A seat weight measuring apparatus comprising:
a support body (14) in which the rigidity in the vertical direction of a vehicle body is set to be smaller than the rigidity in the horizontal direction of the vehicle body, and one end of which is fixed in position relative to a vehicle body and the other end of which is displaced corresponding to a load (F) from a vehicle seat side,
a held body (18) which has a shape retaining property and is held at its middle position by the other end of said support body (14),
a held body facing portion (14d) for detecting displacement of said support body (14) which is formed in said support body (14) to face a tip of said held body (18), and
a magnetism detecting means (20) disposed on the tip of said held body (18), wherein load (F) from the vehicle seat side is measured based on variation in strength of a magnetic field accompanying variation in distance between said held body facing portion (14d) and the tip of said held body (18), said variation being linked with displacement of said support body (14) corresponding to the load (F) from the vehicle seat side.

7. A seat weight measuring apparatus as claimed in claim 6, wherein said held body facing portion (18) comprises a magnetism generating means (19), and
said magnetism detecting means (20) detects the strength of a magnetic field which is generated from said magnetism generating means (19) and varies depending on said distance.

8. A seat weight measuring apparatus as claimed in claim 6 or 7, further comprising another magnetism generating means disposed on the tip of said held body (18), wherein
said magnetism detecting means (20) detects the strength of a magnetic field which is generated from said other magnetism generating means and varies depending on said distance.
